# EUROPÄISCHE PATENTANMELDUNG

(11) **EP 1 239 183 A2**
(43) Veröffentlichungstag der Anmeldung: **11.09.2002**
(21) Anmeldenummer: 02003011.0
(22) Anmeldetag: 12.02.2002
(51) Int. Cl.: F16F 15/00

(54) **Verfahren und Vorrichtung zur Beeinflussung der Übertragung von Schwingungen eines Schwingungserzeugers an einen damit verbundenen Gegenstand, insbesondere von Motorschwingungen auf die Karosserie eines Kraftfahrzeuges**

(30) Priorität: 07.03.2001 DE 10110822
(71) Anmelder: DaimlerChrysler AG, 70567 Stuttgart (DE)
(72) Erfinder: Schnur, Jürgen, 71254 Ditzingen (DE); Tomaschko, Silvia, Dr., 89075 Ulm (DE)

(57) **Zusammenfassung**

Die Erfindung betrifft ein Verfahren und eine Vorrichtung zur Beeinflussung der Übertragung von Schwingungen eines Schwingungserzeugers (6) an einen damit verbundenen Gegenstand (1), insbesondere von Motorschwingungen auf die Karosserie eines Kraftfahrzeuges, wobei im Bereich eines den Schwingungserzeuger (6) mit dem Gegenstand verbindenden Zwischenelements (4) zumindest ein Piezoelement als Aktor (5) angeordnet ist, wobei über das Zwischenelement Primär-Schwingungen zwischen dem Schwingungserzeuger und dem Gegenstand übertragen werden, wobei der Aktor gesteuert zu Sekundär-Schwingungen erregt wird und wobei mit dem Aktor die Gesamtenergie und/oder die Zusammensetzung der Frequenzen der über das Zwischenelement übertragenen Schwingungen verändert und die verbleibende Rest-Schwingung gemessen un zur Regelung der Sekundär-Schwingungen verwendet wird. Überraschend gute Resultate werden hierbei dadurch erreicht, wenn die Sekundär-Schwingungen im Bereich zwischen dem Schwingungserzeuger und dem Zwischenelement eingeleitet werden und wenn die Rest-Schwingung im Bereich zwischen dem Zwischenelement und der Anlage des Zwischenelements und dem Gegenstand gemessen wird.

## Beschreibung

Die Erfindung betrifft ein Verfahren bzw. eine Vorrichtung zur Beeinflussung der Übertragung von Schwingungen eines Schwingungserzeugers an einen damit verbundenen Gegenstand, insbesondere von Motorschwingungen auf die Karosserie eines Kraftfahrzeuges gemäß den Oberbegriffen der Ansprüche 1 bzw. , wie sie bspw. im Automobil auftreten und hier als bekannt unterstellt werden.

Um die von einem Fahrzeug ausgehende Schwingungen und insbesondere im Fahrgastraum wahrnehmbare Geräuschkulisse zu verändern, werden vielerlei Maßnahmen ergriffen. Insbesondere sind hierbei die Anwendung verschiedener Dämmmaterialien in Form von Dämmmatten und dergleichen sowie nachfolgend beschrieben akustische Maßnahmen zu nennen. Gleiches gilt natürlich für jeden Gegenstand, wie bspw. Maschinen, die mit einem weiteren Gegenstand z.B. ein Boden oder die Hülle eines U-Bootes usw. verbunden sind.

So ist z.B. aus der US 5,332,061 A1 ein Verfahren zur Unterdrückung von in die Karosserie eingeleiteten Vibrationen und ein entsprechendes Fahrzeug bekannt. Die betreffenden eingeleiteten Vibrationen stammen vom Motor und werden an den Verbindungspunkten des Motors zumindest mittelbar über die Motorträger an die Karosserie übertragen. Zur Dämpfung dieser Vibrationen weist das Fahrzeug als Shaker, also mechanische Schwingungserreger, ausgebildete Aktoren auf, die im Bereich von Verbindungspunkten des Motors mit der Karosserie angeordnet sind. Beim Betreiben des Motors werden die Shaker in Abhängigkeit von der Motorendrehzahl bei den Resonanzfrequenzen gegenphasig zu den vom Motor kommenden Vibrationen erregt, wodurch die Übertragung der eingeleiteten Vibrationen gedämpft werden. Die entsprechenden Frequenzen und deren Amplituden für die Sekundär-Schwingungen werden hierbei einem zuvor niedergelegten Datenfeld entnommen.

Aus der US 5,434,783 A1 ist ein Fahrzeug bekannt, bei dem die innerhalb einer Fahrgastzelle hörbare Geräuschkulisse durch Schallwellen beeinflußt wird. Neben normalen Lautsprechern wird hier auch ein Piezoelement verwendet, daß die Karosserie zumindest bereichsweise zu Schwingungen anregt und dadurch zur Aussendung von Schallwellen beeinflußt; d.h. das Piezoelement wirkt wie die Spule eines Lautsprechers, während die Karosserie die schwingende Membran darstellt. Mit dem vorbekannten Verfahren und der vorbekannten Vorrichtung wird eine Verbesserung des subjektiven Empfindens innerhalb der Fahrgastzelle erreicht.

Eine weiterführende Ausbildung der obigen Entwicklung zur Beeinflussung des subjektiv wahrgenommenen Fahreindrucks ist aus der DE 195 31 402 A1 bekannt. Gemäß dieser Schrift wird in Abhängigkeit eines Parameters und hierbei insbesondere der Motordrehzahl und/oder der Geschwindigkeit nicht nur der Luftschall, sondern auch der mit dem Körper wahrgenommenen Körperschall bzw. Vibrationen beeinflußt. Hierzu wird je nach Größe des Parameters aus einem Datenfeld bestimmte Daten ausgelesen und unter Zuhilfenahme von Schwingungserregern in u.a. auch körperwahrnehmbaren Sekundär-Schwingungen umgesetzt. Durch diese Maßnahmen können in Verbindung mit der Beeinflussung des akustisch wahrgenommenen Luftschalls sowohl positive als auch negative Interferenzen der künstlichen Sekundär-Schwingungen mit den beim Betreiben des Fahrzeuges fahrzeugseitig sich bildenden Primär-Schwingungen erzeugt werden. Die Interferenzen können je nach Wunsch den wahrgenommenen Eindruck verringern oder aber einen bestimmten Eindruck, bspw. ein Schalten bei mit einem stufenlosen Getriebe versehenen Fahrzeug, vortäuschen.
Die oben genannten Maßnahmen sind jedoch recht aufwendig. Desweiteren erfordern sie immer noch die Verwendung von gewichtserhöhenden Dämmmatten aus einem Dämmmaterial.

Die Aufgabe der Erfindung ist es, ein Verfahren und eine Vorrichtung zu entwickeln, mit dem/der auf eine günstige und möglichst preiswerte Weise eine Beeinflussung von Geräuschen vorgenommen werden kann, die von einem Schwingungserzeuger, insbesondere einem Motor, an einen damit verbundenen Gegenstand, insbesondere eine Fahrkabine eines Fahrzeuges, weitergeleitet werden.

Die Aufgabe wird erfindungsgemäß mit einem Verfahren mit den Verfahrensschritten des Anspruchs 1 bzw. mit einer Vorrichtung mit den Merkmalen des Anspruchs 2 gelöst. Durch die erreger-, insbesondere motorseitige Anordnung eines zu geregelten Schwingungen erregbaren und als Piezoelement ausgebildeten Aktors und die gegenstands-, insbesondere karosserieseitige Anordnung eines die verbleibende Restschwingung detektierenden Detektors, kann auf einfache und preiswerte Weise effizient in die Übertragung von Schwingungen eingegriffen werden, die vom Schwingungserreger, insbesondere vom Motor über ein Zwischenelement, insbesondere einen Motorträger, in den damit verbundenen Gegenstand, insbesondere eine Karosserie und damit in den Fahrgastraum, eingeleitet werden. Die Regelstrecke beinhaltet das Zwischenelement sowie den Detektor und den Aktor, die an den Bereichen der entgegengesetzten Enden des Zwischenelementes angeordnet sind. Die entgegengesetzte Anordnung des Detektors und des Aktors ist zwar scheinbar in fertigungstechnischer und konstruktiver Hinsicht und damit auch kostenseitig ungünstiger, jedoch technisch in unerwartbarem Maße erfolgreich.

Wie überraschend festgestellt werden konnte, tritt durch diese erfindungsgemäße Anordnung ein frequenzabhängiger Verstärkungsfaktor und eine frequenzabhängige Phasenverschiebung auf, die die Geräusch- und/oder Schwingungsbeeinflussung also die Geräusch- und/oder Schwingungsreduktion und/oder ein gewolltes Geräusch- und/oder Schwingungsbild (Sounddesign) in unerwartetem Maße begünstigen sowie den Regelalgorithmus zur Schwingungsdämpfung und/oder zu einem gewollten Sounddesign erleichtert.

Von besonderem Vorteil ist dies weiterhin, da ein Motor ein massives Bauteil ist und damit als quasifester Stützkörper für den Piezo-Aktor wirkt; d.h. der träge Motorblock bilden sozusagen einen virtuellen Fixpunkt für den leicht und energiearm zu Schwingungen erregbaren Motorträger bzw. die Karosserie. Der Detektor hingegen wird im Bereich des akustisch weicheren Gegenstandes angeordnet, da hier bereits gering energetische Anregungen zu verhältnismäßig leicht meßbaren großen Anregungsamplituden führen.

Aufgrund der einfachen Ausgestaltung des erregbaren Piezo-Aktors und des vorzugsweise ebenfalls als Piezoelement ausgebildeten Detektors, insbesondere als Unter- und/oder Beilegscheibe, ist mit der Erfindung u.a. eine Kosteneinsparung verbunden, die bspw. auf eine Vereinfachung der Anforderung an Konstruktion, auf vereinfachte Bauteilgeometrien und damit Kosteneinsparung beim Gießen usw., sowie auf einer möglichen Verringerung schalldämmender Maßnahmen, wie Dämmmatten und dgl., zurückzuführen sind.

Weitere sinnvolle Ausgestaltungen der Erfindung sind den jeweiligen Unteransprüchen entnehmbar. Im übrigen wird die Erfindung anhand von in den Zeichnungen dargestellten Ausführungsbeispielen näher erläutert. Dabei zeigt
- Fig. 1: einen Ausschnitt auf die Verbindung Motor, Motorträger und Karosserie und,
- Fig. 2: ein Ausschnitt einer Verbindung zwischen Motorträger und Motor,
- Fig. 3: ein 0-3-Piezokeramik-Polymer-Komposit für einen Aktor und/oder Sensor,
- Fig. 4: ein 1-3-Piezokeramik-Polymer-Komposit für einen Aktor und/oder Sensor und
- Fig. 5: ein Diagramm des Leistungspegels der 18-ten Motorordnung in [dB] in Abhängigkeit von der Motordrehzahl einer mit einer Vergleichsmessung mit unbeeinflusstem und erfindungsgemäß beeinflusstem Schwingungsübertrag.

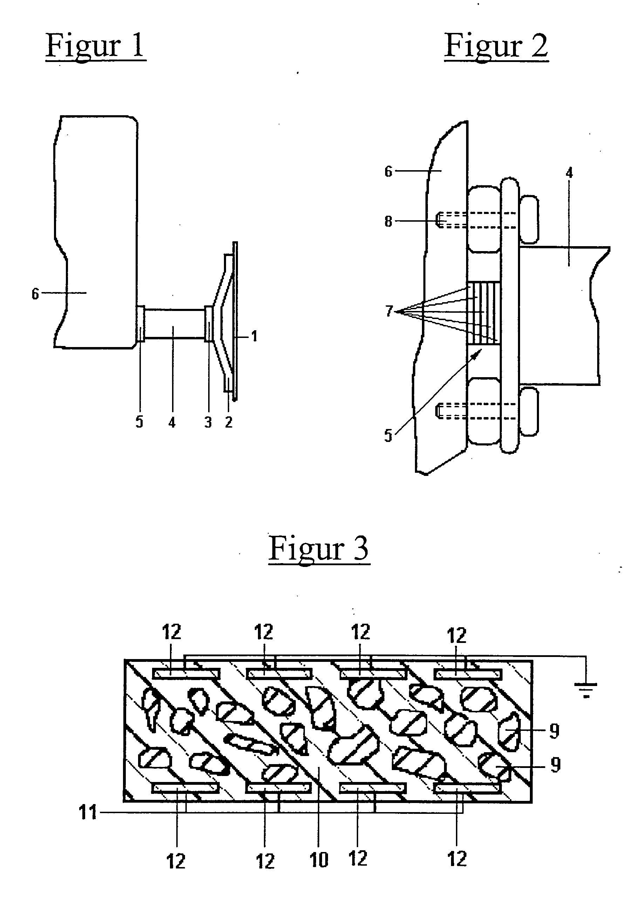

In Figur 1 ist ein Motor dargestellt, der an einem Motorträger befestigt ist. Der Motorträger ist an seinem anderen Ende über einen Verstärkungsflansch 2 an der Karosserie eine Kraftwagens befestigt. Zwischen dem Motorträger und dem Motor ist eine Unterlegscheibe angeordnet, die gleichzeitig als Aktor 5 wirkt. Bei dem Aktor 5 handelt es sich um ein Piezoelement, das zu geregelten Schwingungen erregbar ist. Zwischen dem Motorträger und dem Verstärkungsflansch 2 ist eine weitere Unterlegscheibe angeordnet. Die weitere Unterlegscheibe stellt sinnvollerweise einen Detektor 3 für Schwingungen dar und ist insbesondere auch als Piezoelement ausgebildet.

Im Sinne der Erfindung entspricht damit der Motor dem Schwingungserzeuger 6, der Motorträger dem Zwischenelement 4, und der Komplex bestehend aus Verstärkungsflansch 2, Karosserie und ggf. einem Motorlager entspricht dem Gegenstand 1.

Natürlich kann die erfindungsgemäße Anordnung eines Aktors 5 und eines Detektors 3 nicht nur an einem einzigen, sondern auch an mehreren Zwischenelementen, von denen der Schwingungserzeuger gehaltert ist, erfolgen. Hier ist dann seitens des angewandten Algorithmus der Regelstrecken darauf zu achten, daß keine Übersteuerung auftritt.

In Figur 2 ist ein Ausschnitt einer möglichen Verbindung von einem Motor und einem Motorträger dargestellt. Bei diesem Ausführungsbeispiel befindet sich zwischen den Schrauben 8, die den Motor mit dem Motorträger lösbar verbinden, ein Zwischenraum. In dem Zwischenraum ist der Aktor 5 als Beilegscheibe, bevorzugt mit einer Vorspannung eingelegt. Der Aktor 5 ist in diesem Fall als mehrlagige Piezokeramik (Lagen 7) ausgebildet. In analoger Weise kann im Bereich des Überganges Motorträger/Gegenstand der in dieser Figur 2 nicht dargestellte Detektor ausgebildet und angeordnet sein. Bei dem Detektor 3 kann es sich sinnvollerweise auch um ein Piezoelement handelt, mit dem Beschleunigungen meßbar sind.

Die Piezo-Aktoren 5 sowie die Piezo-Detektoren 3 nach den Figuren 1 und 2 können - je nach Vorteile im jeweiligen Einsatzfall - bspw. monolithisch massiv sein und/oder aus mehreren aufeinander gelegten Schichten einzelner Lagen von insbesondere folien- und/oder scheibenartigen Piezokeramiken gebildet sind. Gegenüber einer massiven Bauweise verringert sich bei den Multi-layer-Systemen bei gleicher Beanspruchung und gleicher aktiver Fläche - die Spannung, während sich die Strom erhöht.

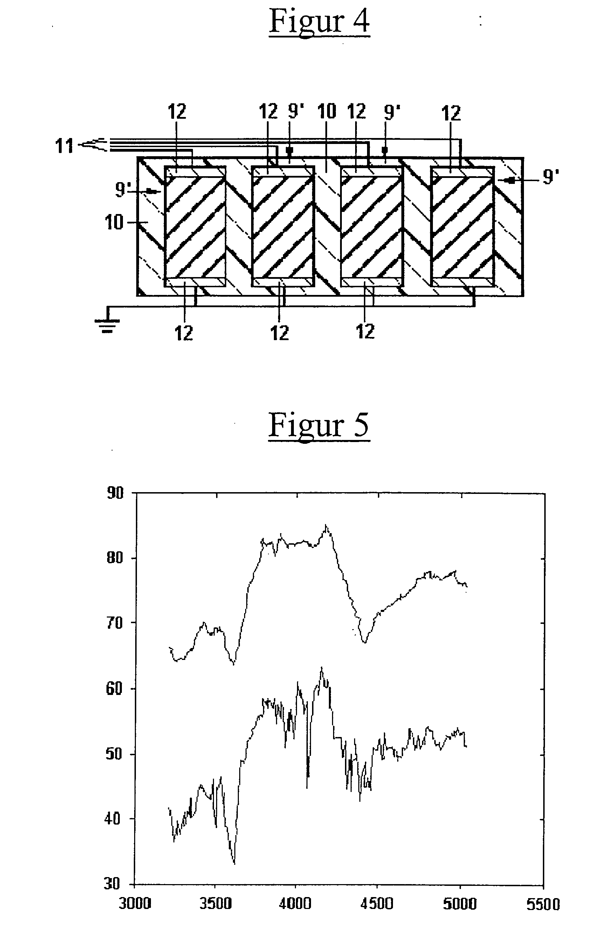

Anstelle einer aus den Figuren 1 und 2 bekannten Anordnung als massive oder "Multi-layer-" Unterleg- (Figur 1) und oder Beilegscheiben (Figur 2), können die als Aktor 5 und/oder als Detektor 3 verwendeten Piezoelemente zweckmäßigerweise, wie in Figur 3 und 4 dargestellt, auch Piezopartikel 9, 9' aufweisen, die in einer Polymermatrix 10 integriert sind.

Figur 3 zeigt eine Polymermatrix 10 aus vorzugsweise elektrisch leitendem Kunststoff, in der mehrere ein Piezoelement bildende Piezopartikel 9 in beliebiger Größe, Orientierung und körperlicher Gestaltung eingebettet sind. Eine derartige Anordnung wird i.a. als 0-3-Piezokeramik-Polymer-Komposit bezeichnet. Im Bereich der Wandungen sind günstigerweise elektrische Kontakte 11 angeordnet, die durch elektrische Steuerleitungen 11 mit einer Steuereinheit (nicht dargestellt) verbunden sind.

Durch die elektrischen Kontakte 12 können die einzelnen Piezopartikel 9 zum einen gezielt angesteuert werden. Zum anderen ist es auch möglich eine elektrische Spannung abzugreifen, die z.B. dadurch entstehen kann, das übertragenen Schwingungen einen Drucks auf die Piezopartikel 9 ausüben und diese deformieren.

In Figur 4 ist eine weitere Polymermatrix 10 dargestellt, in der ebenfalls mehrere Piezopartikel 9' eingebettet sind. Im Gegensatz zu dem Ausführungsbeispiel nach Figur 3 sind diese Piezopartikel 9' von bestimmter Größe und Form und zusätzlich orientiert angeordnet. Eine derartige Anordnung wird i.a. als 1-3-Piezokeramik-Polymer-Komposit bezeichnet.

Im Bereich der Wandungen der Polymermatrix 10 sind ebenfalls elektrische Kontakte 12 angeordnet, die gleichfalls durch elektrische Steuerleitungen 11 mit einer Steuereinheit (nicht dargestellt) verbunden sind. Im Unterschied zu Figur 3 ist bei der Ausführungsform nach Figur 4 ein jedes einzelne Piezopartikel 9' elektrisch kontaktiert und somit auch getrennt einzeln ansteuerbar.

Über die elektrischen Kontakte 12 können die einzelnen Piezopartikel 9' gezielt zu Sekundär-Schwingungen mit gewünschten Frequenzen und Amplituden erregt werden. Die Sekundär-Schwingungen können mit den übertragenen Schwingungen interferiert und/oder diesen überlagert werden. Im Falle einer negativen Interferenz können zuvor ohne diese Beeinflussung wahrgenommenen Geräusche und/oder Schwingungen zumindest verringert werden, während bei einer Überlagerung bspw. ein gewünschter Fahreindruck, also vom akustischem und/oder vibrationseitigem Fahrempfinden her, möglich ist.

Insgesamt kann bei der Erfindung durch den Einsatz der Aktoren 5 die Übertragungsfunktion zwischen einem Schwingungserzeuger 6 und dem damit über ein Zwischenelement 4 verbundenen Gegenstand 1 sowie umgekehrt verändert werden. Bei der erfindungsgemäßen Verwendung geregelt steuerbarer Piezoelemente kann dies in vorteilhafter Weise variabel und reversibel erfolgen, wodurch die Möglichkeiten zur Beeinflussung und hierbei insbesondere zur Verstimmung sehr gut sind.

Das Resultat einer Beeinflussung einer Anordnung gemäß Figur 1 ist in Figur 5 dargestellt. Figur 5 zeigt ein Diagramm des Leistungspegels der 18-ten Motorordnung in [dB] in Abhängigkeit von der Motordrehzahl einer mit einer Vergleichsmessung mit unbeeinflusstem und erfindungsgemäß beeinflusstem Schwingungsübertrag. Das unbeeinflusste Resultat wird durch die obere Kurve, das Resultat mit erfindungsgemäßer Beeinflussung durch die untere Kurve repräsentiert.

Das Diagramm wurde beim Motorhochlauf zwischen 3000 Umdrehungen pro Minute (U/min) und 5500 U/min aufgenommen. Wie anhand des Vergleich der oberen Kurve der unteren Kurve zu sehen ist, betrug die Verminderung insbesondere bei der 3600 U/min Amplitude ca.30 dB; diejenige bei den anderen Frequenzen ist nicht wesentlich geringer. Bei ausgeschalteten Piezoelementen betrug der Leistungspegel zwischen ca. 63 dB und ca. 85 dB. Mit erfindungsgemäßer Beeinflussung, also mit aktivierten und zu Sekundär-Schwingungen erregten Aktoren 5 und den steuernd eingreifenden Detektoren 3 betrug der Leistungspegel etwa 30. Dies bedeutet eine Verringerung des Leistungspegels von sehr hohem Ausmaß.

Durch eine 'in situ' - Ermittlung der real vorliegenden übertragenen Schwingung mittels des Detektors 3 kann die Sekundär-Schwingung immer in Abhängigkeit zu der übertragenen Schwingung verändert wird.

Sinnvollerweise wird ein aktives und Kontakte 12 aufweisendes Piezoelement gemäß der Figuren 3 und 4 vorzugsweise baulich ausgerichtet, bspw. unter Zuhilfenahme einer Nut angeordnet. Die gezielte Ausrichtung dieser Piezoelemente dient dazu, daß die aktive Achse der Piezoelemente 9, 9' zumindest in etwa in Richtung der höchsten Amplitude und/oder in Kraftflussrichtung weist.

Ein besonderer Vorteil der Erfindung ist noch darin zu sehen, daß durch die Anordnung der Aktoren 5 und der Detektoren 3 an den entgegengesetzten Bereichen des Motorträgers, zur Beeinflussung der Geräuschkulisse nur kleine Hübe notwendig sind. Dies gilt sowohl bei der Erzeugung und/oder Erhöhung eines bestimmten Geräuscheindrucks als auch bei der Verminderung und/oder Unterdrückung bestimmter Geräusche.

Ferner ist aufgrund der kleinen Hübe und des geringen Verluststromes bei Piezoelementen der Energiebedarf bei dieser Einflussnahme günstigerweise gering.

## Patentansprüche

1. Verfahren zur Beeinflussung der Übertragung von Schwingungen eines Schwingungserzeugers an einen damit verbundenen Gegenstand, insbesondere von Motorschwingungen auf die Karosserie eines Kraftfahrzeuges, wobei im Bereich eines den Schwingungserzeuger mit dem Gegenstand verbindenden Zwischenelements zumindest ein Piezoelement als Aktor angeordnet ist, wobei über das Zwischenelement Primär-Schwingungen zwischen dem Schwingungserzeuger und dem Gegenstand übertragen werden, wobei der Aktor gesteuert zu Sekundär-Schwingungen erregt wird und wobei mit dem Aktor die Gesamtenergie und/oder die Zusammensetzung der Frequenzen der über das Zwischenelement übertragenen Schwingungen verändert und die verbleibende Rest-Schwingung gemessen und zur Regelung der Sekundär-Schwingungen verwendet wird,
**dadurch gekennzeichnet,**
**daß** die Sekundär-Schwingungen im Bereich zwischen dem Schwingungserzeuger (6) und dem Zwischenelement (4) eingeleitet werden und daß die Rest-Schwingung im Bereich zwischen dem Zwischenelement (4) und der Anlage des Zwischenelements (4) an dem Gegenstand (1) gemessen wird.

2. Vorrichtung zur Beeinflussung der Übertragung von Schwingungen eines Schwingungserzeugers an einen damit verbundenen Gegenstand, bevorzugt von Motorschwingungen auf die Karosserie eines Kraftfahrzeuges, besonders bevorzugt von einer im Fahrgastraum wahrnehmbaren Geräuschkulisse, wobei im Bereich eines den Schwingungserzeuger mit dem Gegenstand verbindenden Zwischenelement, insbesondere eines Motorträgers zumindest ein zu geregelten Sekundär-Schwingungen erregbarer und als Piezoelement ausgebildeter Aktor und ein Detektor angeordnet ist,
**dadurch gekennzeichnet,**
**daß** der Aktor (5) im Bereich zwischen dem Zwischenelement (4) und dem Schwingungserzeuger (6) angeordnet ist und daß der Detektor (3) im Bereich zwischen dem Zwischenelement (4) und dem Gegenstand (1) angeordnet ist.

3. Vorrichtung nach Anspruch 2,
**dadurch gekennzeichnet,**
**daß** der Aktor (5) in einer Unterlegscheibe angeordnet ist.

4. Vorrichtung nach Anspruch 2,
**dadurch gekennzeichnet,**
**daß** der Aktor (5) als Unterlegscheibe ausgebildet ist.

5. Vorrichtung nach Anspruch 2,
**dadurch gekennzeichnet,**
**daß** der Aktor (5) in einer Beilegscheibe oder in einem derartigen Distanzkörper angeordnet ist.

6. Vorrichtung nach Anspruch 2,
**dadurch gekennzeichnet,**
**daß** der Aktor (5) eine Beilegscheibe oder ein derartiger Distanzkörper ist.

7. Vorrichtung nach Anspruch 2,
**dadurch gekennzeichnet,**
**daß** der Detektor (3) ein Piezoelement ist.

8. Vorrichtung nach Anspruch 2,
**dadurch gekennzeichnet,**
**daß** der Detektor (3) in einer Unterlegscheibe angeordnet ist.

9. Vorrichtung nach Anspruch 2,
**dadurch gekennzeichnet,**
**daß** der Detektor (3) als Unterlegscheibe ausgebildet ist.

10. Vorrichtung nach Anspruch 2,
**dadurch gekennzeichnet,**
**daß** der Detektor (3) in einer Beilegscheibe oder in einem derartigen Distanzkörper angeordnet ist.

11. Vorrichtung nach Anspruch 2,
**dadurch gekennzeichnet,**
**daß** der Detektor (3) eine Beilegscheibe oder ein derartiger Distanzkörper ist.

12. Vorrichtung nach Anspruch 2,
**dadurch gekennzeichnet,**
**daß** der Detektor (3) ein Beschleunigungssensor ist.

13. Vorrichtung nach Anspruch 2,
**dadurch gekennzeichnet,**
**daß** der Detektor (3) ein 3D-Beschleunigungssensor ist.
